(19) **Europäisches Patentamt**

**European Patent Office**

**Office européen des brevets**

(11) **EP 1 313 638 B1**

(12) **EUROPÄISCHE PATENTSCHRIFT**

(45) Veröffentlichungstag und Bekanntmachung des Hinweises auf die Patenterteilung:
**07.07.2004 Patentblatt 2004/28**

(51) Int Cl.$^7$: **B62D 15/02**, G01L 25/00

(21) Anmeldenummer: **01971626.5**

(86) Internationale Anmeldenummer:
**PCT/DE2001/003191**

(22) Anmeldetag: **21.08.2001**

(87) Internationale Veröffentlichungsnummer:
**WO 2002/016188 (28.02.2002 Gazette 2002/09)**

(54) **VERFAHREN ZUR SELBSTKALIBRIERUNG EINES VON EINEM DREHMOMENT- UND WINKELMESSER ERFASSTEM TORSIONSWINKELS**

METHOD FOR SELF-CALIBRATING A TORSION ANGLE DETECTED BY A TORQUE/ANGLE SENSOR

PROCEDE D'AUTO-ETALONNAGE D'UN ANGLE DE TORSION MESURE PAR UN DISPOSITIF DE MESURE DE COUPLE ET D'ANGLE

(84) Benannte Vertragsstaaten:
**DE ES IT**

(30) Priorität: **22.08.2000 DE 10041090**

(43) Veröffentlichungstag der Anmeldung:
**28.05.2003 Patentblatt 2003/22**

(73) Patentinhaber: **ROBERT BOSCH GMBH**
**70442 Stuttgart (DE)**

(72) Erfinder:
• **HEISENBERG, David**
 **70839 Gerlingen (DE)**
• **NOLTENMEYER, Ralf**
 **73249 Wernau (DE)**

(56) Entgegenhaltungen:
**EP-A- 0 313 999      DE-A- 4 141 739**
**DE-A- 19 745 823    DE-A- 19 835 694**
**DE-A- 19 955 475**

EP 1 313 638 B1

**Beschreibung**

Stand der Technik

Die Erfindung geht aus von einem Verfahren zur Selbstkalibrierung eines von einem Drehmoment- und Winkelmesser (torque angle sensor, TAS) gemessenen Drehwinkels nach der Gattung des Hauptanspruchs. Drehmomentund Winkelmesser zur Bestimmung eines Drehwinkels und eines Torsionswinkels an einer Welle sind bereits bekannt. Beispielsweise wurde in der gattungbildenden DE 198 35 694 A1 eine Sensoranordnung beschrieben, bei der auf einer rotierenden Welle zwei Winkelsensoren angeordnet sind. Zwischen den beiden Winkelsensoren ist ein Torsionselement so angebracht, dass bei einem auf die Welle wirkenden Drehmoment die beiden Winkelsensoren einen Verdrehwinkel des Torsionselementes messen können. Aus dem Verdrehwinkel lässt sich dann das Drehmoment bestimmen. Bei vielen Systemen, beispielsweise im Kraftfahrzeugbereich ist es notwendig, ein sehr steifes Torsionselement (Torsionsstab) zu verwenden. So soll beispielsweise bei Lenksystemen der Verdrehwinkel typischerweise nicht größer als 3° werden. Bei den relativ kleinen Drehmomenten, die an der Lenkstange auftreten, ergibt sich dann nur ein kleiner Torsionswinkel, der zudem genau gemessen werden muss. Eine genaue Messung ist erforderlich, um beispielsweise das Signal des Winkelgebers zur Steuerung eines Servomotors verwenden zu können.

Vorteile der Erfindung

Das erfindungsgemäße Verfahren zur Selbstkalibrierung eines von einem Drehmoment- und Winkelsensor gemessenen Torsionswinkels mit den kennzeichnenden Merkmalen des Hauptanspruchs hat demgegenüber den Vorteil, dass nicht nur kleine Torsionswinkel gemessen werden können. Vielmehr ist es möglich, den Torsionswinkel mit großer Präzision zu messen bzw. zu berechnen. Als besonders vorteilhaft wird angesehen, dass nach dem erfindungsgemäßen Verfahren eine Kalibrierung des Sensors möglich ist, nachdem dieser bereits montiert ist. Ein weiterer Vorteil besteht auch darin, dass auf einen externen Referenzsensor verzichtet werden kann. Diese Vorteile ermöglichen insbesondere in einem Reparaturfall auch eine leichte Austauschbarkeit des Sensors und damit Kosteneinsparungen. Weiterhin wird als besonders vorteilhaft angesehen, dass durch die Selbstkalibrierung der Vorrichtung nachträglich auch Fertigungs- und Montagetoleranzen rechnerisch eliminiert werden können, so dass dadurch auch die Genauigkeit des Sensors gesteigert wird.
Durch die in den abhängigen Ansprüchen aufgeführten Maßnahmen sind vorteilhafte Weiterbildungen und Verbesserungen des im Hauptanspruch angegebenen Verfahrens zur Selbstkalibrierung möglich. So kann auf einfache Weise das anliegende Drehmoment durch eine einfache Multiplikationsrechnung bestimmt werden.
Als besonders vorteilhaft wird auch angesehen, dass die Codierungen berührungslos optisch oder magnetisch lesbar sind. Dadurch arbeitet die Vorrichtung geräuschlos und verschleißfrei. Eine magnetische Codierung bietet weiterhin den Vorteil der Unempfindlichkeit gegenüber unmagnetischem Schmutz.
Optische Markierungen lassen sich dagegen vorteilhaft beispielsweise mit einem Strichcode mit periodischen Codierungen direkt auf die Welle aufbringen, so dass deren Herstellung besonders kostengünstig ist.
Magnetoresistive Sensorelemente, GMR-(Giant Magnetoresistance) oder AMR-Sensoren (Anisotropie Magnetoresistance) oder Hall-Sensoren liefern beim Abtasten der Codespur sinus- und kosinusförmige Signale, die beispielsweise auch in Verbindung mit einem Noniusverfahren leicht auswertbar sind.
Günstig ist weiterhin, dass auch Zwischenwerte durch einfaches Interpolieren berücksichtigt werden können, da die gemessenen und berechneten Winkelgrößen sowie deren Differenzen in einer leicht zugänglichen Wertetabelle gespeichert sind.
Auf diese Weise lassen sich beispielsweise bei einer Lenkstange eines Kraftfahrzeugs nicht nur der Lenkwinkel, sondern auch das auf die Lenkstange wirkende Drehmoment sehr präzise bestimmen. Mit Hilfe dieser Werte kann dann ein Servomotor gesteuert oder geregelt werden.

Zeichnung

Ein Ausführungsbeispiel der Erfindung ist in der Zeichnung dargestellt und in der nachfolgenden Beschreibung näher erläutert.

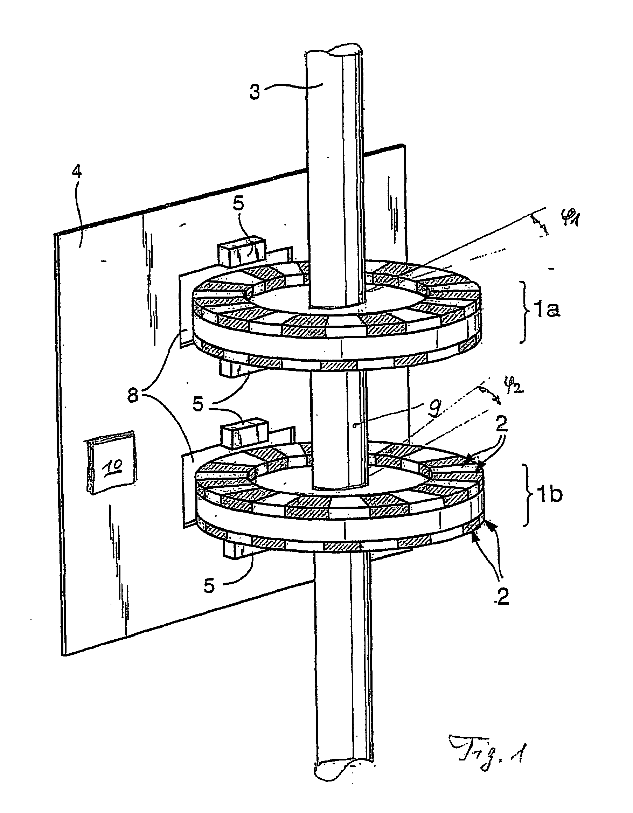

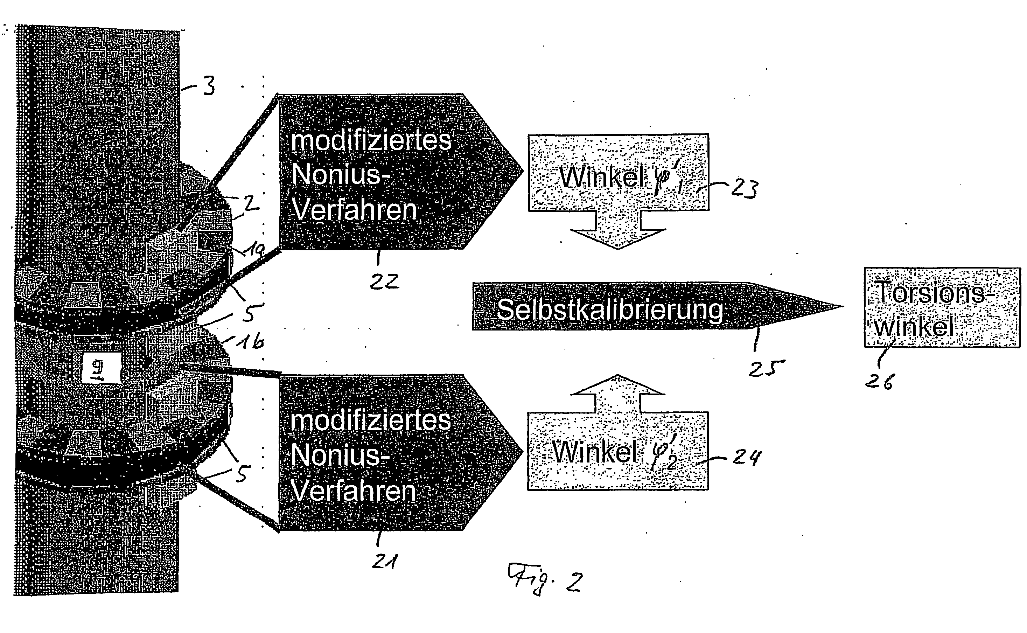

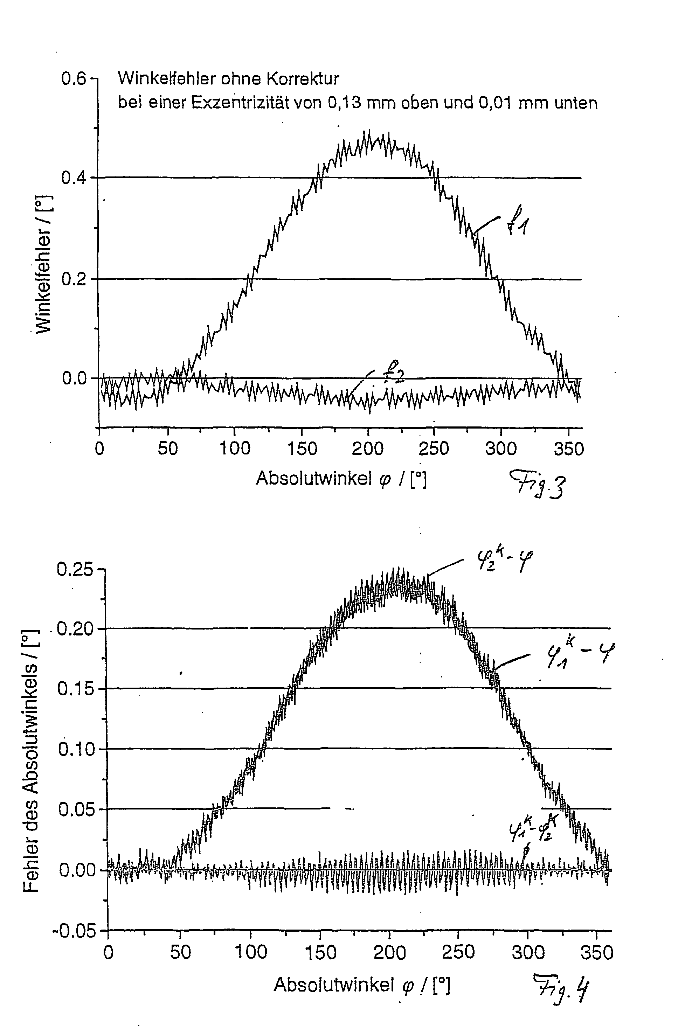

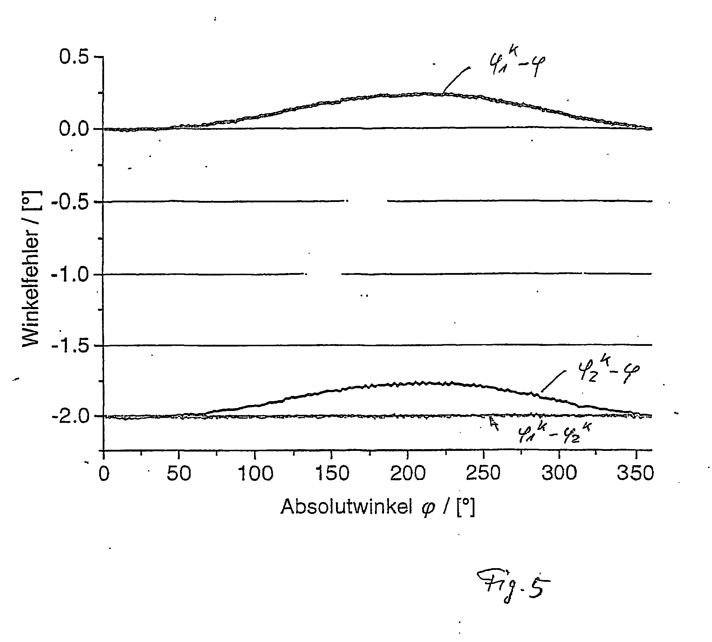

Figur 1 zeigt den schematischen Aufbau einer Drehmoment- und Winkelmess-Einrichtung (TAS), Figur 2 zeigt einen Verfahrensablauf, Figur 3 zeigt ein erstes Diagramm mit Winkelfehlerkurven, Figur 4 zeigt ein zweites Diagramm mit Winkelfehlerkurven und Figur 5 zeigt ein drittes Diagramm mit Winkelfehlerkurven.

Beschreibung des Ausführungsbeispiels

Figur 1 zeigt den schematischen Aufbau einer Drehmoment- und Winkelmesseinrichtung (genannt TAS), wie sie prinzipiell weitgehend bekannt ist. An einer Welle 3 sind zwei Coderäder 1a, 1b axial angeordnet, wobei jedes Coderad 1a, 1b Codierungen 2 aufweist, die periodisch angeordnet sind. Die Codierungen 2 sind beispielsweise als optisch erkennbare Strichcodierungen, unterscheidbare Felder oder Ähnliches angeordnet. In alternativer Ausführungsform sind auch magnetische Codespuren vorsehbar, wobei benachbarte Felder sich mit Nord- und Südpolen abwechseln. An einem Coderad 1a, 1b sind wenigstens zwei Codespuren angeordnet, so dass mit beispielsweise einem per se bekannten Noniusverfahren jedes Coderad 1a, 1b einen Verdrehwinkel der Welle 3 detektieren kann. Die Detektion erfolgt mit entsprechend angeordneten Sensorelementen 5, wobei jedes Sensorelement 5 jeweils nur einer Codespur zugeordnet ist und entsprechende elektrische Signale an eine Auswerteeinheit 10 liefert. Die Auswerteeinheit 10 ist vorzugsweise auf einer Leiterplatte 4 zusammen mit den Sensorelementen 5 angeordnet und gegenüber der Welle 3 drehfest fixiert. Die Anzahl der Codierungen 2 von den beiden zugeordneten Codespuren ist unterschiedlich, so dass mit den bekannten Noniusverfahren eine höhere Winkelauflösung erreicht werden kann. Im Fall der optischen Codierung sind die Sensorelemente 5 als lichtempfindliche Bauteile ausgebildet. Bei Magnetfeldsensoren 5 werden vorzugsweise GMR- oder AMR- oder Hall-Sensoren verwendet. Diese Sensorelemente liefern ein sinus- und kosinusförmiges Signal, das durch eine einfache Arctan-Bildung eine Winkelbestimmung ermöglicht.

Zwischen den beiden Coderädern 1a, 1b ist ein Torsionselement 9 angeordnet, so dass bei Drehung der Welle 3 mit einem gewissen Drehmoment M an beiden Coderädern 1a, 1b unterschiedliche Drehwinkel gemessen werden. Beispielsweise ist diese Vorrichtung an einer Lenkwelle eines Kraftfahrzeugs angeordnet, so dass bei Drehung der Lenkwelle (Lenkstange) mit den Sensorelementen 5 das einwirkende Drehmoment aus der Winkeldifferenz der beiden Coderäder 1a, 1b bestimmt werden kann.

Anhand der nachfolgenden Figuren wird die Funktionsweise des Verfahrens zur Selbstkalibrierung näher erläutert. Figur 2 zeigt dazu in schematischer Darstellung einen Verfahrensablauf für die Selbstkalibrierung. Hintergrund der Erfindung ist, dass die Bestimmung eines Torsionswinkels an der Welle 3 mit großer Präzision durchgeführt werden muss, da beispielsweise an einer Lenkwelle der tatsächlich auftretende Torsionswinkel typischerweise 3° nicht überschreiten darf. Mit der Vorrichtung müssen also sehr kleine Winkel gemessen werden, die darüber hinaus noch mit großer Präzision bestimmt werden müssen, um die verlangten Genauigkeitsanforderungen zu erfüllen. Dabei ist auch zu beachten, dass systematische Fehler, die in der Fertigung auftreten können, ebenfalls korrigiert und bei dem Verfahren zur Selbstkalibrierung berücksichtigt werden müssen.

Aufgrund der vorgenannten Fehlermöglichkeiten erfassen die Sensorelemente 5 an den beiden Coderädern 1a, 1b unterschiedliche absolut gemessene Drehwinkel auch dann, wenn kein Drehmoment M auf die Welle 3 einwirkt. Würden in diesem Fall bereits die Differenzwinkel der beiden Coderäder 1a, 1b gebildet werden, dann würden diese einen Torsionswinkel vortäuschen, der nicht existiert. Dieser Torsionswinkelfehler wird in einem ersten Schritt bei der Einkalibrierung der Sensorelemente 5 bestimmt, die vorzugsweise nach der Montage erfolgt, so dass die vorherrschenden Einbau- und Fehlertoleranzen kompensiert werden.

Im ersten Kalibrierungsschritt wird daher bei einem Drehmoment M = 0 die Welle 3 mit einer ausreichenden Anzahl von Schritten in mehr oder weniger kleinen Winkelschritten gedreht und dabei jeweils der von den beiden Coderädern 1a, 1b gelieferte Messwert für den Drehwinkel ermittelt und gespeichert. Jedes Coderad 1a, 1b liefert dabei einen absoluten Drehwinkel, der aufgrund der beiden Codespuren jedes Coderades 1a, 1b mit einem der bekannten Noniusverfahren (Position 21, 22) ermittelt wird. Von diesen beiden Winkeln $\varphi'1$ bzw. $\varphi'2$ (Position 23 bzw. 24) wird in der Auswerteeinheit 10 die Winkeldifferenz $\varphi d$ von $\varphi'1$ und $\varphi'2$ bestimmt (Position 23 bzw. 24). Die Differenz wird als Torsionswinkelfehler $\varphi d$ nach der Formel berechnet:

$$\varphi d = \varphi'1 - \varphi'2 = f1(\varphi) - f2(\varphi)$$

Dabei ist

$$\varphi'1 = \varphi + f1(\varphi)$$

der gemessene Absolutwinkel für das Coderad 1a und

$$\varphi'2 = \varphi + f2(\varphi)$$

für das zweite Coderad. $\varphi$ stellt den wahren Winkel dar. Die Funktion $f1(\varphi)$ entspricht dabei dem Fehler des gemessenen Absolutwinkels des Coderades 1a und analog ist $f2(\varphi)$ der Fehler des gemessenen Absolutwinkels am Coderad 1b.

Des Weiteren wird der Mittelwert $\varphi m$ von den beiden Winkeln $\varphi'1$ und $\varphi'2$ nach der Formel berechnet

$$\varphi m = \frac{\varphi'_1 + \varphi'_2}{2} = \varphi + \frac{f_1(\varphi) + f_2(\varphi)}{2}$$

Die Werte $\varphi m$ oder ein entsprechender Bezugswinkel und $\varphi d$ werden vorzugsweise in Form einer Wertetabelle gespeichert. Ein Beispiel für die gemessenen Fehlerfunktionen $f1(\varphi)$ und $f2(\varphi)$ der beiden Coderäder 1a, 1b zeigt Figur 3 in einem ersten Diagramm. Hier liegt eine Exzentrizität von 0,13 mm am oberen Coderad 1a bzw. 0,01 mm am unteren Coderad 1b vor. Die Kurve f1 der Figur 3 zeigt daher einen großen Winkelfehler, während die Kurve f2 einen sehr viel niedrigeren Fehler zeigt. Die Differenz dieser beiden Kurven stellt also den Torsionswinkelfehler dar, der sich in Abhängigkeit vom gemessenen Drehwinkel ändern kann. Diese Differenz zusammen mit dem Absolutwinkel wird mit einer ausreichenden Anzahl von Stützstellen in der Auswerteeinheit 10 abgelegt. Zwischenwerte für den Torsionswinkelfehler lassen sich durch Interpolation ermitteln.

In Figur 2 ist die Selbstkalibrierung in Position 25 symbolisch dargestellt.

Es wird beispielsweise angenommen, dass die Einrichtung an einer Lenkstange eines Kraftfahrzeugs montiert und wie zuvor beschrieben einkalibriert wurde. Während des Betriebs treten nun durch die Lenkradbewegung Drehmomente M an der Lenkwelle 3 auf, die zu unterschiedlichen Winkelwerten der beiden Coderäder 1a, 1b führen. Der wahre Torsionswinkel sei $\Delta\varphi$.

Beispielsweise wird am oberen Coderad 1a der Winkel

$$\varphi'1 = \varphi + \Delta\varphi + f1(\varphi + \Delta\varphi),$$

am unteren Coderad 1b der Winkel

$$\varphi'2 = \varphi + f2(\varphi)$$

gemessen. Das Verfahren der Selbstkorrektur wird nun so durchgeführt, dass vom oberen gemessenen Winkel $\varphi'1$ die halbe Differenz des Fehlerwinkels, also $\varphi d(\varphi'1)/2$ abgezogen und beim unteren Winkel $\varphi'2$ nach den Formeln addiert wird:

$$\varphi1^k = \varphi'1 - \varphi d(\varphi m)/2$$

$$\varphi2^k = \varphi'2 + \varphi d(\varphi m)/2$$

Der Index k soll dabei den korrigierten Winkel $\varphi'i$ kennzeichnen. Nicht gespeicherte Zwischenwerte werden durch Interpolation ermittelt.

Die Figur 4 zeigt in einem zweiten Diagramm, dass die beiden Winkelfehlerkurven $\varphi1^k - \varphi$ bzw. $\varphi2^k - \varphi$ nach der Selbstkalibrierung zu einem gleichlaufenden Fehler geführt haben, so dass der Differenzfehler $\varphi1^k - \varphi2^k$ um die 0°-Linie pendelt. Die Amplitude der Fehlerkurven ist halbiert gegenüber Figur 3.

Die korrigierten Winkel $\varphi i^k$ haben die Eigenschaft, dass sie bei dem wahren Torsionswinkel 0°, d. h. wenn kein Drehmoment auf die Lenkwelle 3 einwirkt, gleich groß sind. Wirkt dagegen ein bestimmtes Drehmoment auf die Lenkwelle 3 ein, dann ergibt sich ein endlicher Torsionswinkel $\Delta\varphi$, der wie folgt berechnet werden kann:

$$\varphi1^k = \varphi + \Delta\varphi + f1(\varphi + \Delta\varphi) - \varphi d(\varphi m)/2$$

$$\varphi2^k = \varphi + f2(\varphi) + \varphi d(\varphi m)/2.$$

Näherungsweise ergibt sich als Differenz für die korrigierten Winkel $\varphi i^k$

$$\varphi1^k - \varphi2^k = \Delta\varphi$$

Dabei wurde angenommen, dass die Ableitungen der Fehlerkurven vernachlässigbar klein sind.

Figur 5 zeigt ein drittes Diagramm mit Winkelfehlerkurven, wobei in diesem Fall ein Drehmoment M auf die Lenkwelle 3 aufgebracht wurde und dabei beispielsweise ein Torsionswinkel von -2° gemessen wurde. Die obere Kennlinie zeigt nun die Winkelfehler, die bei den entsprechenden Absolutwinkeln $\varphi$ auftreten können, für das obere Coderad 1a mit den Fehlerwinkeln

$$\varphi1^k - \varphi.$$

Entsprechend ist in der unteren Kurve des Diagramms der Figur 5 die Fehlerkurve

$$\varphi2^k - \varphi$$

für das Coderad 1b aufgetragen. Die unterste Kurve im Bereich der -2,0°-Linie entspricht dem auftretenden Torsionswinkel, der diesem Ausführungsbeispiel mit einem Fehler <1% gemessen werden kann.

## Patentansprüche

1. Verfahren zur Selbstkalibrierung eines von einem Drehmoment- und Winkelmesser gemessenen Torsionswinkels an einer Welle (3), an der zwei Coderäder (1a, 1b) mit einem dazwischenliegenden Torsionselement (9) angeordnet sind, wobei den beiden Coderädern (1a, 1b) Sensorelemente (5) zugeordnet sind, die die Codierungen (2) der Coderäder (1a, 1b) entsprechend einem Drehwinkel der Welle (3) erfassen und elektrische Signale an eine Auswerteeinheit (10) senden und wobei die Auswerteeinheit (10) aus den elektrischen Signalen einen Drehwinkel und/oder das an der Welle (3) wirkende Drehmoment bestimmt, **dadurch gekennzeichnet, dass** zur Bestimmung des Drehmomentes in einem Kalibrierschritt mit beiden Coderädern (1a, 1b) eine vorgegebene Anzahl von Drehwinkeln ($\varphi'_1$, $\varphi'_2$) über eine Drehung der Welle (3) bis zu 360° gemessen wird, wobei auf die Welle (3) kein Drehmoment wirkt, dass zu jeder Messung aus den beiden gemessenen Drehwinkeln ($\varphi'1$, $\varphi'2$) ein Bezugswinkel oder Mittelwert ($\varphi m$) und ein Differenzwert ($\varphi d$) gebildet und als Torsionswinkelfehler ($\varphi d(\varphi m)$) gespeichert werden, dass bei einer späteren Verwendung bei einem vorherrschenden Drehmoment (M) an der Welle (3) von dem Drehmoment- und Winkelmesser die beiden momentanen Drehwinkel ($\varphi'1$, $\varphi'2$) gemessen werden, dass aus den

beiden momentanen Drehwinkeln (φ'1, φ'2) der Bezugswinkel oder Mittelwert (φm) und der Differenzwinkel (φd) gebildet werden, dass zu dem Bezugswinkel oder Mittelwert (φm) der zugehörige gespeicherte Torsionswinkelfehler (φd(φm)) gesucht wird, und dass der momentane Differenzwinkel mit Hilfe des gespeicherten Torsionswinkelfehlers (φd (φm)) korrigiert und als wahrer Torsionswinkel ausgegeben wird.

2. Verfahren nach Anspruch 1, **dadurch gekennzeichnet, dass** zur Drehmomentbestimmung der wahre Torsionswinkel mit der Torsionskonstanten des Torsionselementes (9) multipliziert wird.

3. Verfahren nach Anspruch 1 oder 2, **dadurch gekennzeichnet, dass** die Codierungen (2) berührungslos, vorzugsweise optisch oder magnetisch lesbar sind.

4. Verfahren nach Anspruch 3, **dadurch gekennzeichnet, dass** die Codierungen (2) einen Strichcode mit periodisch wiederkehrendem Muster aufweisen.

5. Verfahren nach einem der vorhergehenden Ansprüche, **dadurch gekennzeichnet, dass** die magnetischen Codierungen (2) von einem magnetoresistiven Sensorelement (5), vorzugsweise von einem GMR-, AMRoder einem Hall-Sensor lesbar sind.

6. Verfahren nach einem der vorhergehenden Ansprüche, **dadurch gekennzeichnet, dass** die Messungen der Drehwinkel (φ'1, φ'2) mit einem Noniusverfahren durchgeführt werden.

7. Verfahren nach einem der vorhergehenden Ansprüche, **dadurch gekennzeichnet, dass** die Messung der Drehwinkel (φ'1, φ'2) bei etwa konstanter Drehgeschwindigkeit der Welle (3) erfolgt.

8. Verfahren nach einem der vorhergehenden Ansprüche, **dadurch gekennzeichnet, dass** der Torsionswinkelfehler (φd (φm)) zum einem gemittelten Drehwinkel (φm) zwischen zwei in einer Wertetabelle gespeicherten Werten interpoliert wird.

9. Verfahren nach einem der vorhergehenden Ansprüche, **dadurch gekennzeichnet, dass** die Welle (3) Teil einer Lenkwelle eines Kraftfahrzeugs ist.

10. Verfahren nach Anspruch 9, **dadurch gekennzeichnet, dass** die korrigierten Drehwinkel ($\varphi 1^k$, $\varphi 2^k$) und/oder das Drehmoment zur Steuerung eines Servomotors verwendet werden.

**Claims**

1. Method for self-calibrating a torsion angle measured by a torque/angle sensor on a shaft (3), on which two code wheels (1a, 1b) having a torsion element (9) situated therebetween are arranged, the two code wheels (1a, 1b) being assigned sensor elements (5) which detect the codes (2) of the code wheels (1a, 1b) in accordance with the angle of rotation of the shaft (3) and transmit electric signals to an evaluation unit (10), and the evaluation unit (10) determining from the electric signals an angle of rotation and/or the torque acting on the shaft (3), **characterized in that** in order to determine the torque in a calibration step with the aid of both code wheels (1a, 1b) a predetermined number of angles of rotation ($\varphi'_1$, $\varphi'_2$) are measured over a rotation of the shaft (3) of up to 360°, no torque acting on the shaft (3), **in that** for each measurement a reference angle or mean value (φm) and a difference value (φd) are formed from the two measured angles of rotation (φ'1, φ'2) and are stored as torsion angle error (φd(φm)), **in that** the two instantaneous angles of rotation (φ'1, φ'2) are measured by the torque/angle sensor during a later use in the case of a prevailing torque (M) on the shaft (3), **in that** the reference angle or mean value (φm) and the difference angle (φd) are formed from the two instantaneous angles of rotation (φ'1, φ'2), **in that** the associated stored torsion angle error (φd(φm)) is sought in relation to the reference angle or mean value (φm), and **in that** the instantaneous difference angle is corrected with the aid of the stored torsion angle error (φd(φm)) and output as true torsion angle.

2. Method according to Claim 1, **characterized in that** the true torsion angle is multiplied by the torsion constant of the torsion element (9) in order to determine the torque.

3. Method according to Claim 1 or 2, **characterized in that** the codings (2) can be read in a contactless fashion, preferably optically or magnetically.

4. Method according to Claim 3, **characterized in that** the codings (2) exhibit a bar code with a periodically recurring pattern.

5. Method according to one of the preceding claims, **characterized in that** the magnetic codings (2) can be read by a magnetoresistive sensor element (5), preferably by a GMR, AMR, or a Hall sensor.

6. Method according to one of the preceding claims, **characterized in that** the measurements of the angles of rotation (φ'1, φ'2) are carried out using a nonius method.

7. Method according to one of the preceding claims, **characterized in that** the measurement of the angles of rotation ($\varphi'1$, $\varphi'2$) is performed at an approximately constant rotational speed of the shaft (3).

8. Method according to one of the preceding claims, **characterized in that** the torsion angle error ($\varphi d$ ($\varphi m$)) relating to an averaged angle of rotation ($\varphi m$) is interpolated between two values stored in a value table.

9. Method according to one of the preceding claims, **characterized in that** the shaft (3) is part of a steering shaft of a motor vehicle.

10. Method according to Claim 9, **characterized in that** the corrected angles of rotation ($\varphi 1^k$, $\varphi 2^k$) and/or the torque are/is used to control a servomotor.


**Revendications**

1. Procédé d'auto-étalonnage d'un angle de torsion mesuré par un dispositif de mesure de couple et d'angle sur un arbre (3) portant deux roues de code (1a, 1b) encadrant un élément de torsion (9) avec, associées aux deux roues de code (1a, 1b) des éléments capteurs (5) qui saisissent les codages (2) des roues (1a, 1b) correspondant à un angle de rotation de l'arbre (3) et envoient des signaux électriques à une unité d'évaluation (10) qui détermine, à partir de ces signaux, un angle de rotation et/ou un couple agissant sur l'arbre (3),
**caractérisé en ce que**

- pour déterminer le couple de rotation on effectue pendant une étape de calibrage, au moyen des deux roues de code (1a, 1b) un nombre prédéfini de mesures d'angles de rotation ($\varphi'1$, $\varphi'2$) en faisant tourner jusqu'à 360° l'arbre (3), sans qu'aucun couple ne soit exercé sur lui,
- à chaque mesure, à partir des deux angles de rotation mesurés ($\varphi'1$, $\varphi'2$) sont établis un angle de référence en valeur moyenne ($\varphi m$) ainsi qu'un angle différentiel ($\varphi d$) qui est enregistré en tant qu'erreur d'angle de torsion ($\varphi d(\varphi m)$),
- lors d'une utilisation ultérieure avec un couple (M) s'exerçant sur l'arbre (3), le dispositif de mesure de couple et d'angle mesure les deux angles instantanés de rotation ($\varphi'1$, $\varphi'2$),
- à partir de ces angles mesurés, l'angle de référence ou valeur moyenne ($\varphi m$) et l'angle différentiel ($\varphi d$) sont établis,
- l'erreur d'angle de torsion ($\varphi d(\varphi m)$) associée à l'angle de référence ou valeur moyenne ($\varphi m$) est extrait de la mémoire et l'angle différentiel est corrigé au moyen de cette erreur mémorisée pour donner l'angle de torsion vrai.

2. Procédé selon la revendication 1, **caractérisé en ce que** pour déterminer le couple, l'angle de torsion vrai est multiplié par la constante de torsion de l'élément de torsion (9).

3. Procédé selon la revendication 1 ou 2, **caractérisé en ce que** la lecture des codages (2) peut s'effectuer sans contact, de préférence optiquement ou magnétiquement.

4. Procédé selon la revendication 3, **caractérisé en ce que** les codages (2) présentent un code à barres selon un modèle se reproduisant périodiquement.

5. Procédé selon une des revendications précédentes, **caractérisé en ce que** les codages magnétiques (2) peuvent être lus par un élément capteur (5) magnétorésistif, de préférence par un capteur GMR, AMR ou à effet Hall.

6. Procédé selon une des revendications précédentes, **caractérisé en ce que** les mesures des angles de rotation ($\varphi'1$, $\varphi'2$) sont effectuées au moyen d'un vernier.

7. Procédé selon une des revendications précédentes, **caractérisé en ce que** la mesure des angles de rotation ($\varphi'1$, $\varphi'2$) s'effectue à une vitesse constante de rotation de l'arbre (3).

8. Procédé selon une des revendications précédentes, **caractérisé en ce que** l'erreur d'un angle de torsion ($\varphi d$ ($\varphi m$)) pour un angle de rotation determiné ($\varphi m$) est interpolée entre deux valeurs enregistrées dans un tableau de valeurs.

9. Procédé selon une des revendications précédentes, **caractérisé en ce que** l'arbre (3) est une partie de l'arbre de direction d'une automobile.

10. Procédé selon la revendication 9, **caractérisé en ce que** l'angle de rotation corrigé ($\varphi 1^k$, $\varphi 2^k$) et/ou le couple sont utilisés pour commander un servomoteur.

Fig. 1

modifiziertes
Nonius-
Verfahren

22

Winkel $\varphi_1'$ — 23

Selbstkalibrierung

25

Torsionswinkel

26

modifiziertes
Nonius-
Verfahren

21

Winkel $\varphi_2'$ — 24

Fig. 2

EP 1 313 638 B1

Winkelfehler ohne Korrektur bei einer Exzentrizität von 0,13 mm oben und 0,01 mm unten

Fig. 3

Fig. 4

Fig. 5